**Europäisches Patentamt**

**European Patent Office**

**Office européen des brevets**

(19)

(11) Veröffentlichungsnummer: **0 092 209**
**B1**

(12) # EUROPÄISCHE PATENTSCHRIFT

(45) Veröffentlichungstag der Patentschrift:
**24.06.87**

(51) Int. Cl.⁴: **A 61 C 8/00**

(21) Anmeldenummer: **83103697.5**

(22) Anmeldetag: **16.04.83**

(54) Beschichteter Oralimplantatpfeiler und Verfahren zur Herstellung der Beschichtung.

(30) Priorität: **19.04.82 AT 1519/82**

(43) Veröffentlichungstag der Anmeldung:
**26.10.83 Patentblatt 83/43**

(45) Bekanntmachung des Hinweises auf die Patenterteilung:
**24.06.87 Patentblatt 87/26**

(84) Benannte Vertragsstaaten:
**AT BE CH DE FR GB IT LI LU NL SE**

(56) Entgegenhaltungen:
**DE - A - 2 419 080**
**DE - A - 2 606 540**
**DE - A - 2 632 932**
**DE - A - 2 703 814**
**DE - A - 2 721 686**
**DE - A - 2 818 630**
**DE - A - 3 112 868**
**GB - A - 1 548 413**

(73) Patentinhaber: **Feldmühle Aktiengesellschaft,**
**Fritz-Vomfelde-Platz 4, D-4000 Düsseldorf 11 (DE)**

(72) Erfinder: **Piischka, Gerhard, Dr., Eckertstrasse 113,**
**A-8040 Graz (AT)**

(74) Vertreter: **Uhlmann, Hans, Dr. rer.nat., Dipl.-Chem.,**
**Gladbacher Strasse 189, D-4060 Viersen 1 (DE)**

## Beschreibung

Die Erfindung betrifft einen beschichteten Oralimplantatpfeiler aus Metall, Metallegierung oder Keramik mit einem in den Knochen einzusetzenden Grundabschnitt, der über eine aus vorgefritteten Glasteilchen gebildete Glasur der Halszone in einen Befestigungsabschnitt für den Zahnersatz übergeht, sowie ein Verfahren zur Beschichtung des Oralimplantatpfeiles, wobei auf den Pfeiler eine Beschichtung aufgebracht wird, die sodann gebrannt wird.

Bei Fehlen natürlicher Zähne können subperiostal oder intraossal implantierte Pfeiler die Trägerrolle für den Zahnersatz übernehmen. Ein auf solchen Oralimplantaten sitzender Zahnersatz sitzt fest und wird vom Patienten wie eigene, natürliche Zähne empfunden.

Es hat sich jedoch gezeigt, dass die Ausbildung und der Einsatz derartiger Oralimplantatpfeiler nicht unproblematisch ist. Als Material für den Pfeiler eignen sich entgegen allen Erwartungen Kunststoffe nicht, sondern lediglich Metalle, die durch anodische Oxidation unlösliche Schutzschichten mit hohem elektrischem Widerstand bilden und keramische Materialien, die an sich hochohmig sind und daher praktisch Nichtleiter darstellen. Diese elektrischen Eigenschaften sind notwendig, um eine biologische Verträglichkeit des Pfeilers im lebenden Gewebe zu gewährleisten. Besonders geeignet sind Implantatpfeiler aus keramischem Material, da dort die Problematik galvanischer Ströme gelöst ist, wogegen bei metallischen Materialien wegen einer gewissen Unstabilität der Passivschicht die auftretenden Schwierigkeiten noch nicht voll gelöst sind. Versuche, auf metallische Träger Isolationsschichten zum Beispiel aus Kunststoff oder Silikon aufzubringen, hatten keinen Erfolg vor allem wegen der Ausbildung von Spalten unter der Isolationsschicht und wegen der Flüssigkeitsaufnahme. Man hat auch versucht, ein Implantat im geschlossenen Geweberaum einzuheilen und erst nachher an einer Stelle wieder freizulegen, um dann den für die Verankerung der Prothese notwendigen Pfeiler in diesem Implantatkörper einzuschrauben oder einzukleben. Es verbleibt jedoch ein Spalt in der Eintrittzone des Pfeilers, was oft Ursache von Infektionen ist. Aus dem gleichen Grunde scheitern die Versuche, eine elastische Verbindung zwischen Implantatkörper und Pfeiler durch einen Kunststoffzwischenteil zu schaffen.

Weitere Schwierigkeiten entstehen dadurch, dass der Pfeiler bzw. seine Verankerung die Übergangszone zwischen Knochen und Mundschleimhaut durchsetzen muss. Knochengewebe verhält sich biologisch bezüglich der Verträglichkeit mit dem Oralimplantat anders als die mit Epithel begleitete Mundschleimhaut. Es hat sich gezeigt, dass Knochengewebe an gewissen Materialien eine ausgesprochene Anheilungstendenz zeigt, wenn diese Materialien ein bioelektrisch entsprechendes Verhalten zeigen und eine bio-kompatible Oberfläche aufweisen. Insbesondere eine rauhe oder poröse Struktur des Implantatkörpers mit einer Nischenbildung von etwa 6 bis 60 µm hat sich bewährt. An der Stelle, an welcher der Pfeiler durch die Mundschleimhaut durchtritt, verursachen aber diese für die Knochen so günstige Strukturen eine Ansiedlung von Bakterien und Plaques sowie Zahnsteinbildung, was im weiteren Verlaufe Entzündungen und Gewebeabbau zur Folge hat. Zum Unterschied von der rauhen bzw. porösen Struktur im Knochenbereich muss daher die Zone des Pfeilerdurchtrittes glatt und epithelverträglich sein.

Man hat in letzter Zeit versucht, die geschilderten Schwierigkeiten durch Plasmabeschichtungen der Oberfläche von Metallimplantaten zu vermeiden, wobei eine Gliederung der Oberflächenstruktur dadurch hergestellt wird, dass der Pfeilerhals glatt und der eigentliche in dem Knochen eingesetzte Grundabschnitt des Implantatkörpers rauh ausgebildet wurde.

Aus der GB-A-1 548 413 ist es bekannt, zur Erhöhung der mechanischen Festigkeit, insbesondere der Schlagfestigkeit, eines Oralimplantatkörpers auf den gesamten Implantatkörper eine Beschichtung im Plasmaspritzverfahren aufzubringen, die sodann gebrannt wird. Diese Beschichtung besteht aus zwei Teilschichten, nämlich einerseits einer metallischen Grundschicht und einer darüber aufgebrachten Deckschicht aus einer Mischung von Aluminiumoxid und Dentalporzellan. Da der Plasmaspritzvorgang mit sehr hohen Temperaturen, nämlich 3000 bis 15 000 °C arbeitet, ist dieses Verfahren zur Herstellung einer im Sinne der Erfindung wirksamen Beschichtung nicht geeignet. Die Plasmabeschichtung ist neben dem aufwendigen Verfahren mit einem weiteren Nachteil behaftet: Auch bei exakter Ausführung der Einpflanzungsoperation lässt sich nicht genau vorherbestimmen, wo sich nach der Einheilung die Grenze zwischen Epithel und Bindegewebe, Knochen inbegriffen, einpendeln wird. Eine geringe nachlaufende Atrophie in dieser Zone ist daher unvermeidbar. Dieses führt dazu, dass das Epithel in den rauhen Oberflächenbereich gelangen kann bzw. das Bindegewebe in den glatten Oberflächenbereich. In einem solchen Fall ist die Gefahr von Entzündungen des Epithels nicht auszuschliessen und das Bindegewebe heilt nur unvollkommen an den Implantatkörper an. Ausserdem entsteht dadurch der wesentliche Nachteil, dass die zwischen dem implantierten Grundabschnitt des Pfeilers und dem Befestigungsabschnitt für den Zahnersatz liegende Halszone des Pfeilers nach der Einheilung in vorher unbestimmbarem Grad sichtbar wird. Besonders im vorderen Mundbereich kann dieses das Aussehen des Patienten bei geöffnetem Mund stark stören, denn metallische Implantatkörper sind an ihrer Oberfläche zumeist grau bis graublau, keramische Implantatkörper weiss, gelblich oder grau. Alle diese Farben wirken im Mund störend.

Die DE-A-3 112 868 beschreibt ein mit bioaktivem Material auf seiner gesamten Länge beschichtetes Implantat, wobei durch die Beschichtung eine starke Bindung im Kieferknochen erzielt werden soll. Es hat sich jedoch gezeigt, dass das

bioaktive Material im enossalen Teil vielfach schneller angelöst wird als das Knochengewebe nachwächst, so dass der Implantatkern gewissermassen in einem Hohlraum sitzt und die beabsichtigte Wirkung nicht eintritt. Desweiteren wird die biologisch aktive Beschichtung auch vom Epithel-Gewebe angelöst, so dass das nachwachsende Epithel-Gewebe irritiert wird und nicht glatt an der sich auflösenden Beschichtung anliegen kann.

Ein Verfahren zum Beschichten von Al$_2$O$_3$-Keramiken mit bioaktivem Glas ist auch aus der DE-A-2 703 814 bekannt. Dieser bekannte Vorschlag sieht die Anordnung von zumindestens 2 Glasschichten vor, von denen die direkt auf dem Keramikmaterial angeordnete Schicht Mikrorisse aufweisen soll und mit einer weiteren Schicht abgedeckt ist. Zur Herstellung der Schichten wird von einem Glaspulverprodukt ausgegangen, das zur Bildung einer Aufschlämmung mit organischen Polymerisaten und geeigneten organischen Lösungsmitteln vermischt wird. Der Auftrag der Beschichtung erfolgt durch Eintauchen in die Aufschlämmung, so dass auch bei diesem Vorschlag die oben beschriebenen Nachteile auftreten.

Die Erfindung setzt sich zur Aufgabe, diese Nachteile zu vermeiden und einen Oralimplantatpfeiler der eingangs geschilderten Art so zu verbessern, dass die Verträglichkeit sowohl mit Epithelgewebe als auch mit dem anschliessenden Bindegewebe verbessert und zugleich die Halszone des Implantatkörpers farblich der Umgebung angepasst wird.

Diese Aufgabe wird erfindungsgemäss bei einem Oralimplatatpfeiler der eingangs beschriebenen Art durch die kennzeichnenden Merkmale des Anspruches 1 gelöst.

Ein Verfahren zur Beschichtung eines Oralimplantatpfeilers aus Metall, Metallegierung oder Keramik, insbesondere Aluminiumoxidkeramik, wobei die Halszone des Pfeilers zur Ausbildung einer Glasur mit einer Aufschlämmung aus vorgefritteten Glasteilchen versehen und einem anschliessenden Brennvorgang unterzogen wird, ist dadurch gekennzeichnet, dass die vorgefritteten Glasteilchen gebundene Farbpigmentteilchen enthalten und in der Aufschlämmung einer von nicht rückstandsfrei verdunstenden organischen Beimengungen freien Flüssigkeit lediglich auf die Halszone aufgetragen werden, und dass der Brennvorgang oberhalb 700 °C erfolgt.

Überraschenderweise hat sich herausgestellt, dass durch eine solche Beschichtung der Halszone des Implantatkörpers die unterschiedlichen biologischen Eigenschaften von Schleimhautepithel einerseits und Bindegewebe endothelialen Ursprungs andererseits derart ausgenutzt werden, dass die jeweils günstigste Oberflächenstruktur automatisch mittelfristig erreicht wird. Die auf die Halszone aufgebrachte Glaspigmentschicht wird langsam vom endothelialen Gewebe angelöst, wodurch die Haftung für dieses Gewebe an der Oberfläche der Halszone ständig besser wird. Das Epithel der Mundschleimhaut hat dagegen auf die Glaspigmentschicht keine auflösende Wirkung, so dass dort, wo dieses Epithel an der Beschichtung anliegt, diese Beschichtung glatt bleibt. Dadurch wird das Epithelgewebe da nicht oder möglichst wenig irritiert, jedoch dem anschliessenden Bindegewebe des Knochens genügend Adhäsionsflächen zum lückenlosen Anwachsen geboten.

Zusätzlich wird die Halszone des Implantatpfeilers farblich der Umgebung angepasst, so dass die in der Praxis auftretenden Schwankungen des Schleimhautdurchbruchniveaus optisch getarnt sind. Es bereitet hierbei keine Schwierigkeiten, die Farbgebung der Halszone so zu wählen, dass sie schleimhautähnlich bzw. zahnähnlich wird. Da die häufigsten Farben der Implantatmaterialien intensiv weiss, grau, graublau oder gelb sind, muss die aufgebrachte Beschichtung bzw. deren Pigmentanteil stark decken. Die Bestandteile der Beschichtung dürfen in verarbeitetem Zustand keine nachteilige Wirkung auf das anliegende Gewebe haben und müssen auch ansonsten physiologisch unbedenklich sein. Metall- und Erdmetalloxide, die beim Einfärbungsvorgang der Glasteilchen keramisch gebunden werden, wie Rutil, Titanoxid, Manganoxid, Zinkoxid, Zirkonoxid usw. erfüllen diese Forderungen zufriedenstellend. Die Farbgebung erfolgt zur Tarnung in Zahnfleischfarbe rosa oder in Zahnfarbe weisslich bis gelblich je nachdem, ob der darüberliegende künstliche Zahn bei Auftreten einer nachlaufenden Atrophie optisch kürzer oder länger erscheinen soll.

Durch entsprechende Wahl des Zusatzes leicht schmelzender Glaspulverteilchen kann die Bindung bzw. Haftkraft nach Wunsch eingestellt werden.

Da die Wärmeausdehnungskoeffizienten üblicherweise verwendeter vorgefritteter Glasteilchen für das Temperaturintervall zwischen 20 und 600 °C zwischen etwa $10 \times 10^{-6}$ und $30 \times 10^{-6}$ liegen, bereitet es keine Schwierigkeiten, durch wenige Brennversuche das Beschichtungsmaterial auf das jeweilige Trägermaterial abzustimmen, obwohl die erhältlichen Farbfrittenpulver unterschiedliche Wärmeausdehnungswerte zeigen können. Das erwähnte Temperaturintervall von 20 bis 600 °C ist jenes, bei welchem die verwendeten Farbfrittenpulver noch fest sind, wogegen sie bei Überschreitung einer Temperatur von etwa 600 °C allmählich in den teigigen Zustand übergehen. Bei Verwendung von Aluminiumoxid, welches einen sehr niedrigen Wärmeausdehnungskoeffizient aufweist als Material für den Implantatkörper, ist die Anpassung der Wärmeausdehnungskoeffizientenwerte der Beschichtung, so dass der Wert der Aluminiumoxidkeramik überschritten wird, noch leichter. Spannungen und Risse werden daher mit Sicherheit vermieden.

Die zur Bereitung der Aufschlämmung der vorgefritteten Glasteilchen dienende Flüssigkeit muss rückstandsfrei verdunsten, um zu vermeiden, dass die beim Brand der Beschichtung eintretende Haftung benachbarter Pulverteilchen durch Rückstände aus der verdunsteten Flüssigkeit gestört wird. Solche Rückstände könnten nach dem Brand auch zu unerwünschten Verfärbungen führen. Aus diesem Grund kann keine der sonst üblichen Malflüssigkeiten oder Firnisse für den erfindungsgemässen Zweck verwendet werden, da die bekannten Malflüssigkeiten organische Beimengungen enthalten, die die rissfreie und randverfärbungsfreie Verbindung zum Implantatkörper stören. Am besten eignet sich eine Alkoholwassermischung, durch welche ausserdem eine raschere Haftung und Trocknung der Farbpulversuspension am Implantatkörper erzielt wird. Zur Vermeidung von Porositäten in der fertig gebrannten Beschichtung ist es gemäss einer vorteilhaften Weiterbildung der Erfindung nützlich, entmineralisiertes Wasser zur Bereitung der Aufschlämmung einzusetzen. Dadurch wird einer Sprengung des Aufbrandes durch Carbonate sicher entgegengewirkt. Als Alkoholzusatz zu dem entmineralisierten Wasser haben sich niedrig siedende primäre, sekundäre oder tertiäre Alkohole bewährt. Insbesondere eignet sich eine Flüssigkeitsmischung aus entmineralisiertem Wasser, die 20 Vol.% an Alkohol enthält.

Die Aufschlämmung kann mit einem Pinsel auf die Halszone aufgebracht werden, es ist aber auch eine Applikation der Aufschlämmung durch Tauchen oder Aufsprühen möglich.

Die auf die Halszone aufgebrachte Beschichtungsmasse sollte vor dem Brand zumindest 5 Minuten vorgetrocknet werden. Dieses hat sich zur Vermeidung von Rissen in der Glasur als vorteilhaft erwiesen. Die Grösse der verwendeten, vorgefritteten, eingefärbten Glasteilchen bzw. leicht schmelzenden Glaspulverteilchen ist nicht kritisch. Handelsübliche Teilchen haben Grössen zwischen etwa 3 µm und etwa 20 µm. Dieser Grössenbereich hat sich bewährt. Der Brand, bei welchem aus der auf die Halszone aufgebrachten Aufschlämmung die Beschichtung in Form einer Glasur entsteht, erreicht zumindest Temperaturen zwischen 800 und 900 °C, wobei es von der Ofentype und der Anstiegsgeschwindigkeit der Temperatur abhängt, wie lange der Brennvorgang dauert. Bei einem Anstieg von etwa 50 °C/Min. und bei einer Anfangstemperatur von 450 °C dauert der Brennvorgang etwa 10 Minuten. Insbesondere bei Aufbringung der Beschichtung auf metallische Implantatpfeiler sollte der Brand nicht zu lange dauern, da dieses zu unerwünschten Verfärbungen durch die Metalloxide des Trägermaterials führen kann. Eine besonders innige Verbindung mit dem Trägermaterial, vor allem dann, wenn dieses aus keramischem Material besteht, kann im Rahmen der Erfindung dadurch erzielt werden, dass der Brandbeginn insbesondere bis Erreichung einer Temperatur von etwa 700 °C unter Vakuum erfolgt. Bei Erreichen dieser Temperatur wird das Vakuum abgeschaltet und durch das anschliessende Ansteigen des Luftdruckes bei der hohen Temperatur wird eine innige Verbindung der teigigen Glasurmaterialien mit dem Trägermaterial erzielt. Bei Verwendung von Implantaten aus Metall, zum Beispiel Titan oder Metallegierungen kann ebenfalls die Brandführung unter Vakuum beginnen, insbesondere dann, wenn die Oberfläche des Implantatkörpers für die Glasurmasse unzugängliche Poren aufweist. Zur Vermeidung von Rissen in der Glasur hat es sich in einer weiteren Ausbildung der Erfindung als vorteilhaft erwiesen, nach dem Brand langsam, insbesondere für eine Dauer von zumindestens 20 Minuten, unter Vermeidung von Luftbewegung abzukühlen. Dadurch werden innere Spannungen im Implantatkörper ausgeglichen, so dass Spätfrakturen des Implantates vermieden werden.

Im folgenden wird die Erfindung an 2 Beispielen näher erläutert:

Beispiel 1

Ein Oralimplantatpfeiler aus Aluminiumoxid soll in der Halszone mit einer zum Epithel und zum Bindegewebe verträglichen rosaroten Glasur versehen werden. Hierzu wird eine pulverige Masse aus vorgefritteten, mit rosaroten Rutilpigmenten gefärbten Glasteilchen, mittlere Teilchengrösse 10 µm, mit einem geringen Zusatz von ungefärbten, leicht schmelzenden Glaspulverteilchen, mittlere Teilchengrösse 12 µm, vermischt, und das Pulvergemisch sodann mit einer Mischung von 20 Vol.% Ethylalkohol und 80 Vol.% entmineralisiertem Wasser zu einer Suspension verarbeitet. Diese Suspension wird sodann mit dem Pinsel auf die Halszone aufgetragen, bis dort die gewünschte farbliche Deckung erzielt ist. Sodann wird der beschichtete Implantatkörper 10 Minuten getrocknet und hierauf in einen Ofen eingebracht, dessen Temperatur 450 °C beträgt. Die Temperatur wird pro Minute um etwa 40 °C gesteigert, bis eine Temperatur von 850 °C erreicht ist. Bis zur Erreichung einer Temperatur von 700 °C wird im Ofen ein Unterdruck von etwa 0,7 bar aufrechterhalten. Bei Erreichen der Temperatur von 700 °C wird der Unterdruck allmählich abgebaut, und bei Erreichen der Brandendtemperatur von 850 °C die Brandführung beendet. Die Abkühlung erfolgt luftzugsfrei für eine Dauer von 20 Minuten auf Raumtemperatur.

Beispiel 2

Es wird wie nach Beispiel 1 vorgegangen, jedoch wird ein Implantatkörper aus Titan verwendet, und es wird ein mit Zirkonoxid weiss eingefärbtes Glasfrittenpulver mit einer mittleren Korngrösse von 15 µm verwendet, wodurch ein in der Halszone mit einer weissen Glasur versehener Implantatkörper erhalten wird.

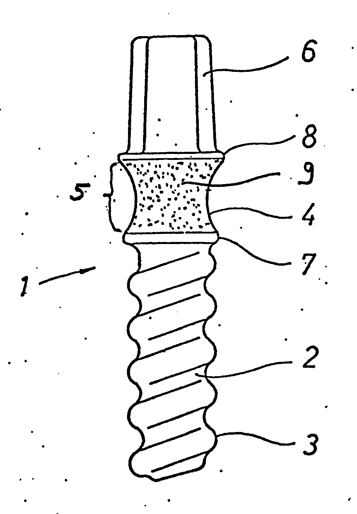

In der Zeichnung ist ein durch das erfindungsgemässe Verfahren hergestellter Oralimplantatkörper schematisch in Ansicht dargestellt, ohne dass die Erfindung auf die Zeichnung beschränkt ist. Der Oralimplantatkörper 1 hat einen in den Knochen einzusetzenden Grundabschnitt 2, der mit einem Schraubgewinde 3 versehen ist und über eine mit einem eingezogenen bogenförmigen Profil 4 versehene Halszone 5 in einen Befestigungsabschnitt 6 für den Zahnersatz übergeht.

Die Halszone 5 ist von zwei schmalen Flanschen 7 und 8 begrenzt, und zwischen diesen beiden Flanschen mit einer Glasur 9 in Zahnfarbe weiss bzw. gelblich oder in Farbe der Mundschleimhaut rosa bzw. fleischfarben versehen.

## Patentansprüche

1. Oralimplantatpfeiler (1) aus Metall, Metallegierung oder Keramik mit einem in den Knochen einzusetzenden Grundabschnitt (2), der über eine aus vorgefritteten Glasteilchen gebildete Glasur (9) der Halszone (5) in einen Befestigungsabschnitt (6) für den Zahnersatz übergeht, dadurch gekennzeichnet, dass die vorgefritteten Glasteilchen gebundene Farbpigmentteilchen enthalten und die Glasur (9) lediglich in der Halszone (5) aufgetragen ist.

2. Verfahren zur Beschichtung eines Oralimplantatpfeilers (1) aus Metall, Metallegierung oder Keramik, insbesondere Aluminiumoxidkeramik, nach Anspruch 1, wobei die Halszone (5) des Pfeilers (1) zur Ausbildung einer Glasur (9) mit einer Aufschlämmung aus vorgefritteten Glasteilchen versehen und einem anschliessenden Brennvorgang unterzogen wird, dadurch gekennzeichnet, dass die vorgefritteten Glasteilchen gebundene Farbpigmentteilchen enthalten und in der Aufschlämmung einer von nicht rückstandsfrei verdunstenden organischen Beimengungen freien Flüssigkeit lediglich auf die Halszone (5) aufgetragen werden und dass der Brennvorgang oberhalb 700 °C erfolgt.

3. Verfahren nach Anspruch 2, dadurch gekennzeichnet, dass der Aufschlämmung aus vorgefritteten Glasteilchen, die Farbpigmentteilchen gebunden enthalten, zusätzlich leicht schmelzende Glaspulverteilchen zugesetzt werden.

4. Verfahren nach einem der Ansprüche 2 und 3, dadurch gekennzeichnet, dass die zur Bereitung der Aufschlämmung dienende, rückstandsfrei verdunstende, von organischen Beimengungen freie Flüssigkeit aus einer Mischung von Wasser mit Alkohol besteht.

5. Verfahren nach einem der Ansprüche 2 bis 4, dadurch gekennzeichnet, dass die zur Bereitung der Aufschlämmung dienende Flüssigkeit aus einer Mischung von entmineralisiertem Wasser mit Alkohol besteht.

6. Verfahren nach einem der Ansprüche 2 bis 5, dadurch gekennzeichnet, dass die zur Bereitung der Aufschlämmung dienende Flüssigkeit aus einer Mischung von entmineralisiertem Wasser mit einem niedrig siedenden primären, sekundären oder tertiären Alkohol besteht.

7. Verfahren nach einem der Ansprüche 1 bis 6, dadurch gekennzeichnet, dass zur Bereitung der Aufschlämmung eine Alkoholwassermischung mit einem Vol.%-Anteil von 20% Alkohol eingesetzt wird.

8. Verfahren nach einem der Ansprüche 2 bis 7, dadurch gekennzeichnet, dass die auf die Halszone (5) als Aufschlämmung aufgebrachte Beschichtungsmasse vor dem Brand zumindest 5 Minuten vorgetrocknet wird.

9. Verfahren nach einem der Ansprüche 2 bis 8, dadurch gekennzeichnet, dass das Aufheizen bis zum Erreichen des Brandbeginnes bei 700 °C unter Vakuum erfolgt.

10. Verfahren nach einem der Ansprüche 2 bis 9, dadurch gekennzeichnet, dass nach beendetem Brand der mit der Glasur (9) versehene Oralimplantationspfeiler (1) verzögert abgekühlt wird.

## Claims

1. Oral implant post (1) consisting of metal, metal alloy or ceramic with a base portion (2) to be inserted into the bone which extends, by way of a glazed portion (9) of the neck zone (5), the glaze being formed from prefritted glass particles, into a mounting portion (6) for the replacement tooth, characterised in that the prefritted glass particles contain bonded particles of colouring pigment and the glaze (9) is applied only in the neck zone (5).

2. Process for coating an oral implant post (1) consisting of metal, metal alloy or ceramic, especially aluminium oxide ceramic, according to claim 1, the neck zone (5) of the post (1) being provided with a slurry of prefritted glass particles in order to form a glaze (9) and being subjected to a subsequent firing process, characterised in that the prefritted glass particles contain bonded particles of colouring pigment and are applied only to the neck zone (5) in a slurry of a liquid that is free of organic admixtures that do not evaporate residue-free and that the firing process is carried out above 700 °C.

3. Process according to claim 2, characterised in that, in addition, readily melting glass powder particles are added to the slurry of prefritted glass particles that contain bonded particles of colouring pigment.

4. Process according to claim 2 or 3, characterised in that the liquid that is free of organic admixtures and evaporates residue-free used for preparing the slurry consists of a mixture of water with alcohol.

5. Process according to any one of claims 2 to 4, characterised in that the liquid used for preparing the slurry consists of a mixture of demineralised water with alcohol.

6. Process according to any one of claims 2 to 5, characterised in that the liquid used for preparing the slurry consists of a mixture of demineralised water with a low-boiling primary, secondary or tertiary alcohol.

7. Process according to any one of claims 2 to 6, characterised in that an alcohol-water mixture with a 20% by volume proportion of alcohol is used for preparing the slurry.

8. Process according to any one of claims 2 to 7, characterised in that the coating composition applied in the form of a slurry to the neck zone (5) is predried for at least 5 minutes before firing.

9. Process according to any one of claims 2 to 8, characterised in that heating up until firing commences at 700 °C is carried out under vacuum.

10. Process according to any one of claims 2 to 9, characterised in that when the firing is complete the oral implant post (1) provided with the glaze (9) is subjected to retarded cooling.

## Revendications

1. Pivot dentaire (1) en métal, alliage métallique ou céramique, comprenant une section de base (2) à implanter dans l'os, raccordée par l'intermédiaire de la glaçure (9) d'un collet (5), constituée de particules de verre préfrittées, à une section de fixation (6) pour une dent artificielle, caractérisé en ce que les particules de verre préfrittées renferment des particules de pigments liées, et que la glaçure (9) est appliquée uniquement au niveau du collet (5).

2. Procédé de revêtement d'un pivot dentaire (1) en métal, alliage métallique ou céramique, notamment céramique d'oxyde d'aluminium, selon la revendication 1, le collet (5) du pivot (1) étant, en vue de la réalisation d'une glaçure (9), muni d'une suspension de particules de verre préfrittées et soumis ensuite à une cuisson, caractérisé en ce que les particules de verre préfrittées renferment des particules de pigments liées et sont appliquées en suspension dans un liquide exempt d'additifs organiques s'évaporant sans laisser de résidus, uniquement sur le collet (5), et en ce que la cuisson a lieu au-delà de 700°C.

3. Procédé selon la revendication 2, caractérisé en ce qu'à la suspension de particules de verre préfrittées renfermant des particules de pigments liées, sont en outre ajoutées des particules de poudre de verre facilement fusibles.

4. Procédé selon la revendication 2 ou 3, caractérisé en ce que le liquide destiné à la préparation de la suspension exempt d'additifs organiques s'évaporant sans laisser de résidus, se compose d'un mélange d'eau et d'alcool.

5. Procédé selon l'une des revendications 2 à 4, caractérisé en ce que le liquide destiné à la préparation de la suspension se compose d'un mélange d'eau déminéralisée et d'alcool.

6. Procédé selon l'une des revendications 2 à 5, caractérisé en ce que le liquide destiné à la préparation de la suspension se compose d'un mélange d'eau déminéralisée et d'alcool primaire, secondaire ou tertiaire à bas point d'ébullition.

7. Procédé selon l'une des revendications 2 à 6, caractérisé en ce que, pour la préparation de la suspension, est utilisé un mélange eau-alcool à 20% en volume d'alcool.

8. Procédé selon l'une des revendications 2 à 7, caractérisé en ce que la masse de revêtement appliquée sous forme de suspension sur le collet (5) est préséchée pendant 5 minutes au moins avant la cuisson.

9. Procédé selon l'une des revendications 2 à 8, caractérisé en ce que le chauffage jusqu'au début de la cuisson à 700°C s'effectue sous vide.

10. Procédé selon l'une des revendications 2 à 9, caractérisé en ce qu'à l'issue de la cuisson, le pivot dentaire (1) recouvert de la glaçure (9) est refroidi lentement.